# EUROPÄISCHE PATENTANMELDUNG

(11) **EP 4 428 512 A2**
(43) Veröffentlichungstag der Anmeldung: **11.09.2024**
(21) Anmeldenummer: 24161661.4
(22) Anmeldetag: 06.03.2024
(51) Int. Cl.: G01M 3/18

(54) **SYSTEM ZUR ÜBERWACHUNG EINER WASSERSTOFFANLAGE IN EINEM FAHRZEUG SOWIE DAMIT AUSGEBILDETES FAHRZEUG**

(30) Priorität: 06.03.2023 DE 102023105460
(71) Anmelder: Deutsches Zentrum für Luft- und Raumfahrt e.V., 53227 Bonn-Oberkassel (DE)
(72) Erfinder: HOFF, Tim, 20146 Hamburg (DE); BECKMANN, Simon, 22337 Hamburg (DE)
(74) Vertreter: Günther, Constantin

(57) **Zusammenfassung**

Die Erfindung betrifft ein System zur Überwachung einer Wasserstoffanlage in einem Fahrzeug, die Wasserstoff-führende Speicher- und Leitungssysteme hat, auf Leckagen. Die Erfindung betrifft außerdem ein Fahrzeug mit wenigstens einer solchen Wasserstoffanlage und wenigstens einem solchen System zur Überwachung der Wasserstoffanlage.

## Beschreibung

Die Erfindung betrifft ein System zur Überwachung einer Wasserstoffanlage in einem Fahrzeug, die Wasserstoff-führende Speicher- und Leitungssysteme hat, auf Leckagen. Die Erfindung betrifft außerdem ein Fahrzeug mit wenigstens einer solchen Wasserstoffanlage und wenigstens einem solchen System zur Überwachung der Wasserstoffanlage.

Das zugrunde liegende Problem liegt in der Gefährlichkeit von Wasserstoff, insbesondere seiner einfachen Entzündlichkeit. Ein Wasserstoff-Luft-Gemisch ist zwischen 4 und 75% Anteil Wasserstoff zündfähig. Die Zündenergie ist darüber hinaus sehr gering (ca. Faktor 10 im vgl. zu einem Benzin-Luft-Gemisch), so dass ein einfacher Funken ausreichen kann um eine Explosion auszulösen. Die Explosionsfähigkeit von Wasserstoff ist eine große Herausforderung bei seiner Nutzung als Energieträger und führt oftmals zu Sicherheitsbedenken. Daher sind in der Praxis meist Konzentrationsgrenzen festgelegt, ab den Sicherheitsmaßnahmen eingeleitet werden. Diese beginnen spätestens bei 50% der unteren Explosionsgrenze, also bei 2% Anteil Wasserstoff in Luft. Maßnahmen können dabei die Lüftung von Räumen, Abschaltung von Anlagen, Evakuierungen etc. sein. Es ist daher essentiell die Konzentration von Wasserstoff in Luft exakt bestimmen zu können. Dafür existieren eine Reihe verschiedener Sensoren, die unterschiedliche Ansprechverhalten, Genauigkeiten, Wartungsintervalle, Querempfindlichkeiten und insbesondere Kosten aufweisen. Welches Problem durch die Konzentrationssensoren nicht gelöst wird, ist die Lokalisierung der Leckage, da der Sensor nur die lokale Konzentration an Wasserstoff misst. Der Erfindung liegt die Aufgabe zugrunde, ein besonders zuverlässiges und sicheres System zur Überwachung einer Wasserstoffanlage in einem Fahrzeug sowie ein damit ausgebildetes Fahrzeug anzugeben.

Diese Aufgabe wird gelöst durch ein System zur Überwachung einer Wasserstoffanlage in einem Fahrzeug, die Wasserstoff-führende Speicher- und Leitungssysteme hat, auf Leckagen mit folgenden Merkmalen:
a) mehrere über die räumliche Erstreckung der Wasserstoffanlage verteilte Sensoreinheiten, die jeweils wenigstens einen Gassensor aufweisen, der zur Sensierung von aus der Wasserstoffanlage austretendem gasförmigen Wasserstoff eingerichtet sind,
b) eine Auswerteeinrichtung, die wenigstens zur Auswertung der von den Sensoreinheiten aufgrund deren Sensierung bereitgestellten Sensordaten eingerichtet ist,
c) wenigstens ein Datenkommunikationsnetzwerk, über das die Sensoreinheiten zum Datenaustausch untereinander und mit der Auswerteeinrichtung gekoppelt sind,
d) wobei die Auswerteeinrichtung dazu eingerichtet ist, anhand der Daten mehrerer oder aller Sensoreinheiten durch wenigstens eine geometrische Berechnung und/oder eine andere Auswertung den Ort einer Leckage in der Wasserstoffanlage zu bestimmen, wenn aufgrund der Sensordaten wenigstens der Sensoreinheiten eine Leckage indiziert ist.

Die Erfindung hat den Vorteil, dass eine vollständig automatische Überwachung der Wasserstoffanlage durch das System erfolgen kann. Zudem kann eine automatische Lokalisierung einer Leckage erfolgen, was z.B. gezielte Gegenmaßnahmen, auch automatisch eingeleitete Gegenmaßnahmen, vereinfacht. Zudem werden die Wartung und Reparatur der Wasserstoffanlage vereinfacht. Vorteilhafter Weise kann das erfindungsgemäße System die Detektion einer Leckage und die Bestimmung des Orts einer Leckage vollautomatisch durchführen und benötigt keine manuellen Eingriffe in das System durch Menschen. Dabei können im erfindungsgemäßen System allgemein verfügbare, relativ kostengünstige Gassensoren eingesetzt werden.

Das erfindungsgemäße System eignet sich für die Überwachung von Wasserstoffanlagen in Fahrzeugen aller Art, z.B. in Luftfahrzeugen, Landfahrzeugen und Wasserfahrzeugen. Der Ort einer Leckage kann z.B. durch geometrische Berechnung wie Multiangulation (z.B. Triangulation) oder Multilateration (z.B. Trilateration) bestimmt werden.

Gemäß einer vorteilhaften Ausgestaltung der Erfindung ist vorgesehen, dass das Datenkommunikationsnetzwerk als Datenbus ausgebildet ist. Dies erlaubt eine einfache und zuverlässige datentechnische Kopplung der Sensoreinheiten untereinander und mit der Auswerteeinrichtung. Zudem kann ein solches System auch auf einfache Weise um weitere Sensoreinheiten erweitert werden. Auf diese Weise kann insbesondere ein smartes Sensornetzwerk bereitgestellt werden.

Gemäß einer vorteilhaften Ausgestaltung der Erfindung ist vorgesehen, dass mehrere oder alle Sensoreinheiten als hinsichtlich ihrer Funktionalität einstellbare Sensoreinheiten ausgebildet sind, wobei die Auswerteeinrichtung dazu eingerichtet ist, bei einer durch die Auswerteeinrichtung erkannten Änderung des Zustands der Wasserstoffanlage die Funktionalität einiger oder aller Sensoreinheiten zu verändern. So kann beispielsweise bei Erkennung und Lokalisierung einer Leckage eine an die Situation angepasste weitere Überwachung der Wasserstoffanlage durch Veränderung der Messempfindlichkeit von Sensoreinheiten, insbesondere der in der Nähe des Orts der Leckage befindlichen Sensoreinheiten, erfolgen.

Gemäß einer vorteilhaften Ausgestaltung der Erfindung ist vorgesehen, dass die Auswerteeinrichtung dazu eingerichtet ist, anhand der Sensordaten wenigstens der Sensoreinheiten iterativ sich selbst verbessernde Modelle der Wasserstoffanlage zu erstellen, insbesondere durch Machine Learning, und auf Basis solcher Modelle die weitere Auswertung der Sensordaten durchzuführen. Auf diese Weise kann sich das System sozusagen intelligent an die Besonderheiten der spezifischen Wasserstoffanlage, das überwacht wird, adaptieren. Hierdurch kann die Überwachungssicherheit weiter erhöht werden.

Gemäß einer vorteilhaften Ausgestaltung der Erfindung ist vorgesehen, dass eine, mehrere oder alle Sensoreinheiten wenigstens einen Luftströmungssensor haben, z.B. einen Luftströmungsgeschwindigkeitssensor, durch den Luftströmungen im Bereich der Wasserstoffanlage erfasst werden, wobei die Auswerteeinrichtung dazu eingerichtet ist, die Sensordaten des wenigstens einen Luftströmungssensors bei der Berechnung des Orts einer Leckage in der Wasserstoffanlage und/oder wenigstens eines sonstigen Zustandsparameters der Wasserstoffanlage zu berücksichtigen. Hierdurch kann die Überwachungssicherheit und insbesondere die Genauigkeit der Ortung einer Leckage weiter deutlich verbessert werden. Da Wasserstoff ein sehr flüchtiges Gas ist, das leicht auf Luftströmungen reagiert, kann durch einen solchen Luftströmungssensor die Richtung einer vermuteten Leckage auch durch Sensoreinheiten bestimmt werden, die nicht unmittelbar am Ort der Leckage sind, sondern im Bereich von dessen Lee-Seite.

Der Luftgeschwindigkeitssensor ermöglicht darüber hinaus auch Windströmungen in das Modell der Wasserstoffanlage einfließen zu lassen, sodass eine Leckage auch bei sich bewegender Umgebungsluft präzise lokalisiert werden kann.

Gemäß einer vorteilhaften Ausgestaltung der Erfindung ist vorgesehen, dass eine, mehrere oder alle Sensoreinheiten wenigstens einen Luftgütesensor haben, durch den verschiedene Arten von Gasen außer Wasserstoff detektierbar sind, wobei die Auswerteeinrichtung dazu eingerichtet ist, in Abhängigkeit von den Sensordaten des wenigstens einen Luftgütesensors Querempfindlichkeiten der Gassensoren zumindest teilweise zu kompensieren. Solche Luftgütesensoren können z.B. auf verschiedene Arten von Gas trainiert werden. Dies ermöglicht es, auf flexible Weise verschiedene Arten von Gas, außer Wasserstoff, zusätzlich zu detektieren und somit die Querempfindlichkeiten der WasserstoffKonzentrationssensoren rechnerisch zu kompensieren.

Gemäß einer vorteilhaften Ausgestaltung der Erfindung ist vorgesehen, dass der Auswerteeinrichtung Daten bezüglich des Betriebszustands des Fahrzeugs zugeführt sind, wobei die Auswerteeinrichtung dazu eingerichtet ist, die Bestimmung wenigstens eines Zustandsparameters der Wasserstoffanlage in Abhängigkeit von den Betriebszustandsdaten des Fahrzeugs durchzuführen. Als Betriebszustand des Fahrzeugs kann z.B. die Geschwindigkeit des Fahrzeugs und/oder bei einem Luftfahrzeug die Flughöhe berücksichtigt werden. Beispielsweise kann anhand solcher Betriebszustandsdaten festgestellt werden, ob das Fahrzeug im Stillstand ist oder sich bewegt. Bei stehendem Fahrzeug kann z.B. die Sensitivität der Sensoreinheiten verringert werden, während der Fortbewegung des Fahrzeugs kann die Sensitivität erhöht werden. Als Zustandsparameter der Wasserstoffanlage kommt dabei insbesondere in Frage, ob überhaupt eine Leckage vorhanden ist, und wenn eine Leckage erkannt wurde, die Berechnung des Orts der Leckage.

Gemäß einer vorteilhaften Ausgestaltung der Erfindung ist vorgesehen, dass in Abhängigkeit von Betriebszustandsdaten des Fahrzeugs die Sensoreinheiten durch die Auswerteeinrichtung neu kalibrierbar sind. So kann z.B. durch Betriebszustandsdaten des Fahrzeugs ein Einsatz des Fahrzeugs in veränderten Umgebungsbedingungen, z.B. in einer anderen Klimazone der Erde oder in einem anderen Höhenbereich gegenüber dem Meeresspiegel, erkannt werden und durch eine solche Neukalibrierung der Sensoreinheiten eine entsprechende Anpassung an die veränderten Umgebungsbedingungen durchgeführt werden. Damit die Sensoreinheiten zu Beginn der Fortbewegung des Fahrzeugs zuverlässig ihre Sensordaten ermitteln können, kann den Sensoreinheiten diese Veränderung der Betriebszustandsdaten durch die Auswerteeinrichtung beim Start mitgeteilt werden, sodass sich diese entweder selbst dezentral neu kalibrieren oder durch die Auswerteeinrichtung neu kalibriert werden.

Gemäß einer vorteilhaften Ausgestaltung der Erfindung ist vorgesehen, dass eine, mehrere oder alle Sensoreinheiten wenigstens eine lokal an der Sensoreinheit angeordnete Recheneinheit haben, durch die eine Vorverarbeitung der Sensordaten der Sensoren der jeweiligen Sensoreinheit erfolgt, wobei durch die Recheneinheit insbesondere Querempfindlichkeiten der Gassensoren rechnerisch anhand von Sensordaten anderer Sensoren der jeweiligen Sensoreinheit kompensierbar sind. Auf diese Weise können die örtlich verteilten Sensoreinheiten als smarte bzw. intelligente Sensoreinheiten ausgebildet sein, die bereits selbstständig vor Ort bestimmte Aufgaben durchführen können. Hierdurch wird das Datenkommunikationsnetzwerk entlastet und die Sicherheit des gesamten Systems erhöht. Insbesondere wird es hierdurch möglich, dass die Sensoreinheiten eine Eigenüberwachung ihrer Funktionalität aufweisen.

Gemäß einer vorteilhaften Ausgestaltung der Erfindung ist vorgesehen, dass die Recheneinheit der Sensoreinheit dazu eingerichtet ist, eine lokale Überwachung der Wasserstoffanlage auf Leckagen anhand der Sensordaten der Sensoreinheit auszuführen und in Abhängigkeit von definierten Grenzwerten ein Leckageereignis zu detektieren, wobei die Recheneinheit dazu eingerichtet ist, erst bei Detektion eines Leckageereignisses das Leckageereignis charakterisierende Daten über das Datenkommunikationsnetzwerk zur Auswerteeinrichtung zu übertragen. Auch hierdurch wird das Datenkommunikationsnetzwerk entlastet. Es ist nur ein relativ geringer Datenverkehr erforderlich.

Gemäß einer vorteilhaften Ausgestaltung der Erfindung ist vorgesehen, dass die Recheneinheit der Sensoreinheit dazu eingerichtet ist, auch ohne Auftreten von Leckageereignissen in regelmäßigen oder unregelmäßigen zeitlichen Abständen wenigstens ein Statussignal über das Datenkommunikationsnetzwerk zur Auswerteeinrichtung zu übertragen. Auf diese Weise geben die Sensoreinheiten sozusagen Totmannsignale ab, sodass die Auswerteeinrichtung überwachen kann, ob die Sensoreinheiten noch vorhanden und funktionsfähig sind.

Gemäß einer vorteilhaften Ausgestaltung der Erfindung ist vorgesehen, dass die Recheneinheit der Sensoreinheit dazu eingerichtet ist, bei Erkennung eines Leckageereignisses räumlich benachbarte Sensoreinheiten zur Gassensierung mit erhöhter Meßsensibilität zu aktivieren. Dies kann durch direkte Datenkommunikation der Sensoreinheiten untereinander über das Datenkommunikationsnetzwerk und/oder durch Kommunikation über die Auswerteeinrichtung erfolgen. Dies erlaubt eine schnelle Adaption des smarten Sensornetzwerks an den erkannten Zustand der Wasserstoffanlage. Durch die erhöhte Messsensibilität können die Sensoreinheiten frühzeitig gefährliche Zustände in der Wasserstoffanlage erkennen.

Gemäß einer vorteilhaften Ausgestaltung der Erfindung ist vorgesehen, dass die Sensoreinheiten dazu eingerichtet sind, in einem Empfindlichkeitstestmodus betrieben zu werden, wobei in dem Empfindlichkeitstestmodus die Sensoreinheit dazu eingerichtet ist, das Vorhandensein eines anderen Gases als Wasserstoff, insbesondere eines nichtexplosiven Gases, zu detektieren und als Leckageereignis zu melden. Dies hat den Vorteil, dass gerade in Fahrzeugen, in denen die Sensoreinheiten nicht so gut für eine Prüfung und Wartung zugänglich sind, wie z.B. in einem Flugzeug, mit einem solchen smarten Sensornetz auch eine Testfunktion realisiert werden kann, die mit geringem Aufwand ein Überprüfen der Sensoreinheiten auf Funktionalität ermöglicht. Hierfür kann beispielsweise eine vorhandene Querempfindlichkeit des Gassensors gegenüber anderen Gasen genutzt werden. Beispielsweise kann im Empfindlichkeitstestmodus die bereits erläuterte rechnerische Kompensation der Querempfindlichkeit durch den Luftgütesensor temporär aufgehoben werden. Dann kann die gesamte Anlage mit einem ungefährlichen Testgas geprüft werden, indem eine definierte Konzentration des Testgases durch die Gassensoren und deren Querempfindlichkeit gemessen wird. Vorteilhafter Weise muss hierbei nicht ein explosionsfähiges Gas wie Wasserstoff verwendet werden.

Die eingangs genannte Aufgabe wird außerdem gelöst durch ein Fahrzeug mit wenigstens einer Wasserstoffanlage, die Wasserstoff-führende Speicher- und Leitungssysteme hat, und wenigstens einem System zur Überwachung der Wasserstoffanlage der zuvor erläuterten Art, das zur Überwachung der wenigstens einen Wasserstoffanlage des Fahrzeugs auf Leckagen eingerichtet ist. Auch hierdurch können die zuvor erläuterten Vorteile realisiert werden.

Durch die Verknüpfung mehrerer Konzentrationssensoren über eine Bus-Schnittstelle, die einen zusammenhängenden Raum überwachen (es kann sich dabei auch um einen gewölbten oder verschachtelten Raum handeln), kann der Nachteil der fehlenden Lokalisierungsmöglichkeiten durch Konzentrationssensoren eliminiert werden. Ihre Vorteile (insbesondere der günstige Preis der eine stationäre und dauerhafte Platzierung überhaupt erst ermöglicht), werden davon nicht beeinflusst.

Jeder dieser Sensoren kann mit einer kleinen Recheneinheit (µC) erweitert und über eine Bus-Schnittstelle miteinander verknüpft werden. Dies hat nicht nur den Vorteil, dass jeder Sensor je nach seiner Standortparametrisierung Daten aufzeichnet, sich selbst auswerten und Events melden kann, sondern auch die Gesamtumgebung des Flugzeuges über die Bidirektionale Kommunikation auf einzelne, sowie alle Sensoren angepasst werden kann.

Ein weiterer Vorteil ist, dass direkt neben den H2-Konzentrationssensoren weitere physikalische Messtechnik in die Bewertung eingebunden werden kann. Dies ist besonders bei sich ständig veränderten Umgebung sehr wichtig, um eine genaue H2 Konzentration zu ermitteln. Neben dem Luftdruck-, Temperatur- Feuchtigkeits- und Luftströmungsgeschwindigkeitssensor können auch Luftgütesensoren, welche auf verschiedene Arten von Gas trainiert werden können, eingesetzt werden. Dies ermöglicht flexibel, verschiedene Arten von Gas (neben Wasserstoff) zusätzlich zu detektieren und somit die Querempfindlichkeiten der Wasserstoffkonzentrationssensoren "herauszurechnen". Der Luftgeschwindigkeitssensor ermöglicht darüber hinaus Windströmungen in das Modell einfließen zu lassen, so dass die Leckage auch bei sich bewegender Umgebungsluft präzise lokalisiert werden kann.

Durch das umfassende Bild der Sensorumgebung, basierend auf einem solchen "smarten Sensornetz", können mit den generierten Daten sich selbstverbessende Modelle erstellt und Machine Learning angewandt werden. Die Ermittlung des Leckageortes kann dabei über eine Reihe verschiedener Methoden erreicht werden, z.B. Machine Learning, z.B. kann ein neuronales Netzwerk und/oder ein K-DTW Algorithmus genutzt werden. Dies stellt aber nur eine Möglichkeit zur Bestimmung des Leckageortes da. Eine weitere ist in der geometrischen Berechnung zu sehen. Auch wenn sich Wasserstoff nicht kugelförmig ausbreitet, so ist doch von einem kreisförmigen Ausbreiten unter der Decke des Raumes auszugehen. Damit kann ab einer Anzahl von drei Sensoren durch Triangulation der Ort der Leckage in der Ebene berechnet werden. Auch Gasmodelle z.B. auf Basis von CFD Analysen können hinterlegt werden und zu einer höheren Genauigkeit in der Ortsbestimmung führen.

Im Gegensatz zu allen anderen Leckagelokalisierungsverfahren hat das vorliegende Verfahren signifikante Vorteile. Zuerst benötigt der Betreiber keinen manuellen Eingriff in das System um die Leckage zu lokalisieren. Damit können Menschen aus potentiell gefährlichen Atmosphären herausgehalten werden. Gleichzeitig sinkt die Dauer, in der die wasserstoffführende Anlage abgeschaltet werden muss, erheblich. Der oftmals langwierige Prozess der Leckagelokalisierung wird minimiert und der Bereich, in dem sich die Leckage befindet, deutlich eingeschränkt. Es kann damit deutlich zügiger mit dem Verschließen der Leckage und evtl. notwendigen weiteren Reparaturen begonnen werden.

Durch die Möglichkeit verschiedene Konzentrationssensoren miteinander zu kombinieren, entsteht die Möglichkeit verschiedene Eigenschaften unterschiedlicher Konzentrationssensoren gewinnbringend zu vereinen. Dies kann bspw. das schnelle Ansprechverhalten eines Sensors mit einer sehr exakten Messung eines anderen Sensors sein. Auch die Messung in verschiedenen Konzentrationsbereichen wird so deutlich vereinfacht, da nicht alle Konzentrationssensoren in jedem Bereich der Wasserstoffkonzentration gleichgut messen. Ein großer Vorteil besteht in der Möglichkeit Konzentrationssensoren verschiedener Preisklassen miteinander zu kombinieren. Dies ist zielführend, da zwischen den Sensoren sehr große Preisunterschiede bestehen können.

Preisgünstige Sensoren, die meist eine hohe Querempfindlichkeit aufweisen, können insbesondere durch die Kombination mit Luftgüte-, Luftströmungsgeschwindigkeit-, Temperatur-, Luftdruck- und Feuchtigkeitssensoren verwendet werden. Die Kenntnis dieser Parameter ermöglicht es, die Sensoren "künstlich" im laufendenden Betrieb fortlaufend zu kalibrieren, indem das Dateninformationssystem diese Daten in der Interpretation der erhaltenden Wasserstoffkonzentrationswerte berücksichtigt. Dies ermöglicht auch den Einsatz in Umgebungen mit sich verändernden Umgebungsparametern, wie bspw. mobilen Anwendungen. Dies gilt bspw. in der Luftfahrt, wo sich die Umgebungsparameter sehr schnell und radikal verändern und daher adaptierbare Messung von hoher Relevanz ist.

Die Integration eines Luftströmungsgeschwindigkeitssensors stellt einen weiteren wesentlichen Vorteil dar. Da Wasserstoff ein sehr flüchtiges und leichtes Element ist, hat Bewegung der Umgebungsluft einen großen Einfluss auf die Ausbreitung des Gases. Dies kann durch die Messung der Luftbewegung berücksichtigt werden und damit schlussendlich die Genauigkeit der Lokalisation deutlich erhöhen. Dies eröffnet erneut die Möglichkeit, in mobilen Anwendungen und außerhalb geschlossener Räume Wasserstoffleckagen mithilfe stationärer Konzentrationssensoren zu lokalisieren.

Durch die von den einzelnen Sensoren vorgenommene Eigenauswertung entsteht nur dann ein Datenaustausch auf dem Hauptbus bzw. Zentralsystem, wenn die eingestellten Grenzwerte einen Event absenden (z.B. Überschreitung einer bestimmten Wasserstoffkonzentration). Gleichzeitig besteht weiterhin die Möglichkeit, von jedem einzelnen Sensor die Rohdaten der letzten Stunden abzurufen.

Um einen sicheren Betrieb der Smartsensorik zu garantieren, kann jede Sensoreinheit in regelmäßigen Abständen eine Selbstüberprüfung vornehmen (Watchdog) und sendet in einem ebenfalls vordefinierten Abstand ein Statussignal an die Auswerteeinrichtung.

Auch eine "Sensor Empfindlichkeitstestmessung" im laufenden Betrieb ist mit einem solchen Sensoraufbau möglich. Dazu wird die Querempfindlichkeit des Konzentrationssensors gegenüber anderen Gasen genutzt. Die bereits erläuterte Querempfindlichkeitsfilterung durch den Luftgüte- und andere Sensoren kann softwareseitig aufgehoben werden, um die Gesamtanlage mit einem ungefährlichem Testgas zu überprüfen, indem eine definierte Querempfindlichkeitskonzentration gemessen wird, ohne das explosionsfähige Gas Wasserstoff zu verwenden.

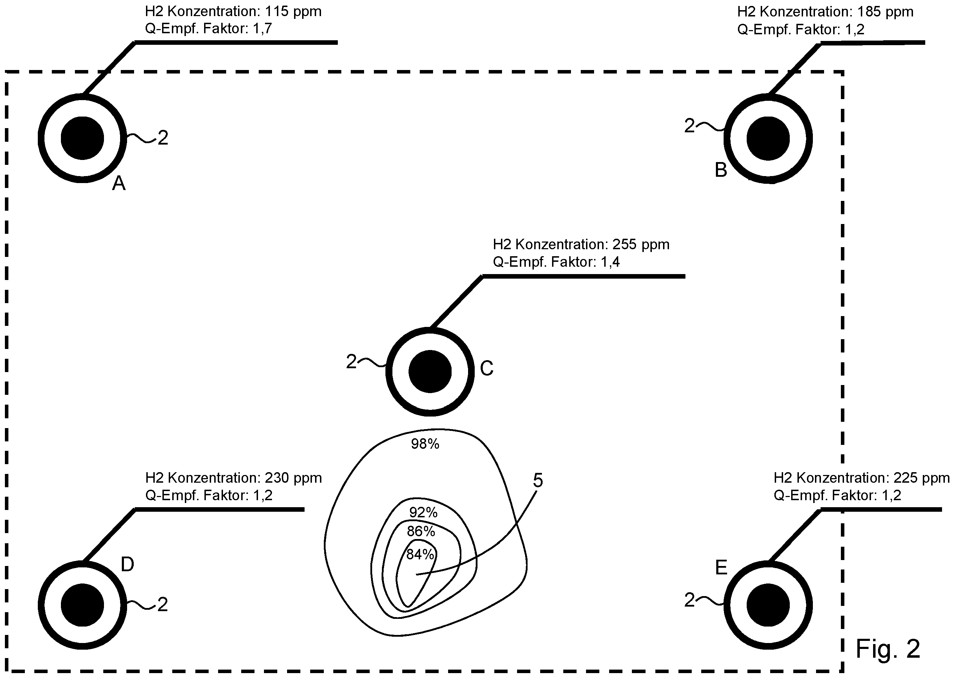

Eine Technologieanwendung könnte sich wie folgt darstellen: In einem Verkehrsflugzeug, welches zumindest teilweise auf der Basis von Wasserstoff angetrieben wird und damit eine komplexe wasserstoffführende Anlage an Bord hat, wird eine Leckage durch mehrere Konzentrationssensoren erkannt. Diese kann trotz starker Umwelteinflüsse (geringer Druck in Reiseflughöhe, -50 Grad Celsius und einem Luftzug in den Segmenten die Wasserstoffanlagen beinhalten) auf einen kleinen möglichen Leckageraum eingegrenzt werden. Die Figur 2 zeigt, wie so eine Übersicht schematisch aussehen könnte. Anhand der Konzentration und weiteren Parametern (wie z.B. Tankfüllstand) kann die Kritikalität der Leckage bestimmt werden. Zusammen mit der Information des Ortes der Leckage kann der Pilot entsprechende Gegenmaßnahmen einleiten (Abschaltung von Anlagen, stärkere Durchlüftung des Raums in dem sich die Leckage befindet). Da Leckagen meistens an Verbindungsstellen wie Ventilen auftreten, kann mit der Eingrenzung auf einen kleinen Leckageraum das System am Boden schnell repariert werden, da nur eine kleine Anzahl an Verbindungsstellen in Frage kommen. Zusätzlich können durch die Umgebungssensoren auch die Konzentrationssensoren auf die veränderte Umgebung am Boden neu "kalibriert" werden (Kein starker Luftzug, Temperatur ca. 20 Grad Celsius und Standardatmosphärendruck). Gleichzeitig werden Abgase von Bodenfahrzeugen am Flughafen herausgefiltert, auf die die Wasserstoffsensoren aufgrund ihrer hohen Querempfindlichkeit reagieren. Dadurch ist eine exaktere Eingrenzung der Leckage möglich. Reicht dies nicht aus, um die Leckage exakt zu lokalisieren, kann der eingegrenzte Raum mit konventionellen Methoden (Lecksuchspray oder Schnüffelsensor) weiter untersucht werden.

Vorteilhaft ist z.B. eine Anwendung in Luftfahrzeugen, die eine Wasserstoffführende Anlage an Bord haben. Diese existieren aktuell noch nicht in einem kommerziellen Maßstab. Allerdings gibt es zahlreiche Unternehmen und Start-ups, die Luftfahrzeuge unter der Verwendung von Wasserstoff betreiben wollen. Dabei ist es für das erfindungsgemäße System unerheblich, ob eine Wasserstoffdirektverbrennung in klassischen Turbinen oder eine Verwendung von Brennstoffzellen vorhergesehen ist. Eine Verwendung in der Luftfahrt ist vorteilhaft, da hier bei jedem Flug eine starke Variation in den Umweltparametern existiert. Darüber hinaus werden hier komplexe Wasserstoffanlagen notwendig werden, die unter starken Vibrationen und mechanischen Belastungen zu Leckagen neigen könnten. Gleichzeitig sind in der Luftfahrtbranche Stillstandzeiten des Fluggeräts mit sehr hohen Kosten verbunden, so dass in der Reduktion von Zeiten zur Identifikation einer Leckagestelle hohe gewerbliche Potentiale liegen. Auch die Sicherheitsanforderungen in der Luftfahrt sind sehr hoch, so dass eine Tolerierung von kleineren Leckagen nicht wahrscheinlich ist.

Darüber hinaus ist eine Anwendung in allen mobilen Anwendungen denkbar. Im Automobil- und Nutzfahrzeugbereich gibt es bereits wasserstoffbetriebene Fahrzeuge und insbesondere im Schwerlastbereich ist dies eine Technologie mit sehr hohem Zukunftspotential. Auch hier existieren variierende Umweltparameter. Wasserstofftankschiffe sind ein weiterer potentieller Anwendungsfall. Bereits heute werden militärische U-Boote oftmals teilweise mit Wasserstoff betrieben, so dass eine Anwendung auch hier denkbar ist. Auch hier gibt es eine hohe Kritikalität gegenüber Ausfallzeiten und hohe Sicherheitsanforderungen. Zukünftig ist die Verwendung von Wasserstoff auch in zivilen Maritimen Anwendungen wie z.B. Fähren geplant.

Auch in der Raumfahrt wird mit großen Mengen Wasserstoff gearbeitet und Leckagen sind in diesem Bereich ebenfalls ein großes Problem und essentielles Sicherheitsrisiko.

Auch in stationären Anwendungen in geschlossenen Räumen ist eine Überwachung der Konzentration essentiell und eine Anwendung des vorgestellten Systems denkbar. Dies betrifft ein sehr großes Feld an zukünftigen Anwendungen wie bspw. in wasserstofferstellenden Elektrolyseuren. Dabei ist insbesondere die Anpassung der Sensoren an sich veränderte Umgebungsbedingungen hilfreich. Durch einen vermehrten Einsatz von Wasserstoff wird es lokal (und zeitlich begrenzt) zu einem geringfügigen höheren Anteil von Wasserstoff in der Umgebungsluft kommen. Die hier vorgestellte smarte Sensorik, die so etwas erkennen kann, wird daher von größerer Relevanz sein. Sollte es zu einer Verwendung von Wasserstoff im Gasnetz kommen, steigen die Anwendungsfälle nochmals deutlich.

Die Erfindung wird nachfolgend anhand von Ausführungsbeispielen unter Verwendung von Zeichnungen näher erläutert.

Es zeigen
- Figur 1: ein System zur Überwachung einer Wasserstoffanlage in einem Fahrzeug,
- Figur 2: schematische Darstellung einer Leckagenlokalisierung des Systems gemäß Figur 1,
- Figur 3: gemessene Wasserstoffkonzentrationen an den Sensoreinheiten des Systems gemäß Figur 1,
- Figur 4: ein weiteres System zur Überwachung einer Wasserstoffanlage.

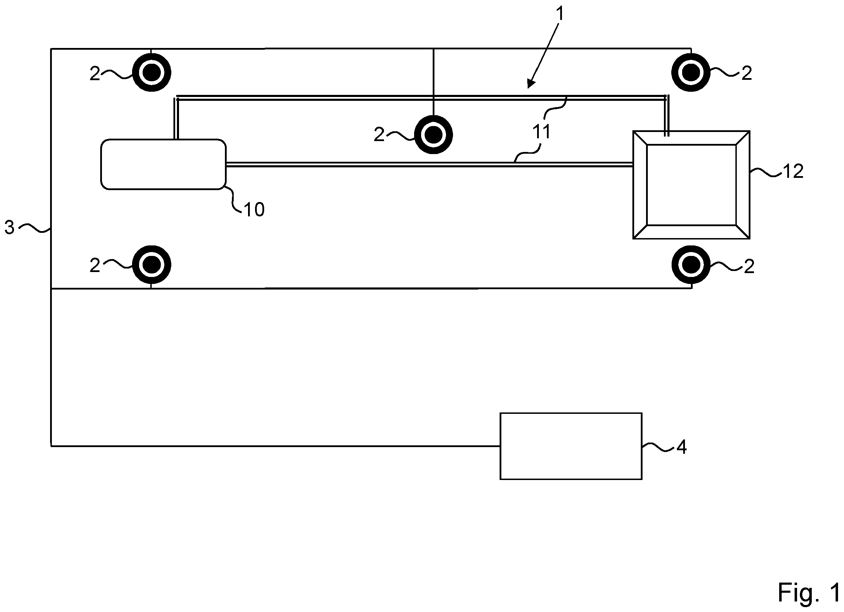

Die Figur 1 zeigt eine Wasserstoffanlage 1 eines nicht dargestellten Fahrzeugs. Die Wasserstoffanlage 1 weist beispielsweise einen mit Wasserstoff gefüllten Tank 10 und eine den Wasserstoff nutzende Brennstoffzelle oder einen anderen Verbraucher 12 auf. Der Verbraucher 12 ist über Wasserstoff-führende Leitungen 11 mit dem Tank 10 verbunden.

Des Weiteren zeigt die Figur 1 ein System zur Überwachung dieser Wasserstoffanlage 1, das mehrere über die räumliche Erstreckung der Wasserstoffanlage 1 verteilte Sensoreinheiten 2 hat. Die Sensoreinheiten 2 sind mit einem Datenkommunikationsnetzwerk 3 verbunden, insbesondere einem Datenbus. Der Datenbus kann insbesondere als CAN-Datenbus ausgebildet sein. Des Weiteren ist eine Auswerteeinrichtung 4 vorhanden, die ebenfalls mit dem Datenkommunikationsnetzwerk 3 verbunden ist. Die Sensoreinheiten 2 sind als intelligente Sensoreinheiten mit eigener Recheneinheit ausgebildet. Zudem weisen die Sensoreinheiten 2 zumindest einen Gassensor auf, der zur Sensierung von aus der Wasserstoffanlage 1 austretendem gasförmigen Wasserstoff eingerichtet ist. Die Sensoreinheiten 2 können jeweils auch weitere Sensoren aufweisen, beispielsweise einen Ultraschallsensor, einen Luftdrucksensor, einen Temperatursensor, einen Feuchtigkeitssensor, einen Luftströmungssensor und/oder einen Luftgütesensor.

Die Sensoreinheiten 2 überwachen die Wasserstoffanlage 1 jeweils lokal am Ort, an dem sie angebracht sind. Die Sensoreinheiten 2 übertragen im Falle der Sensierung von Wasserstoff in ihrem Bereich entsprechende Daten über das Datenkommunikationsnetzwerk 3 an die Auswerteeinrichtung 4. Die Auswerteeinrichtung 4 wertet diese Daten aus und bestimmt den Ort einer Leckage in der Wasserstoffanlage 1 anhand der Sensordaten.

Anhand der Figur 2 wird dies anhand der dort angegebenen Wasserstoffkonzentrationen am Ort der jeweiligen Sensoreinheiten 2 in einem Beispiel verdeutlicht. Durch die Sensoreinheiten 2 kann damit der Ort 5 der Leckage relativ genau bestimmt werden, wobei durch die dargestellten Bereiche am Ort 5 der Leckage die Genauigkeit der Bestimmung in Prozent angegeben ist.

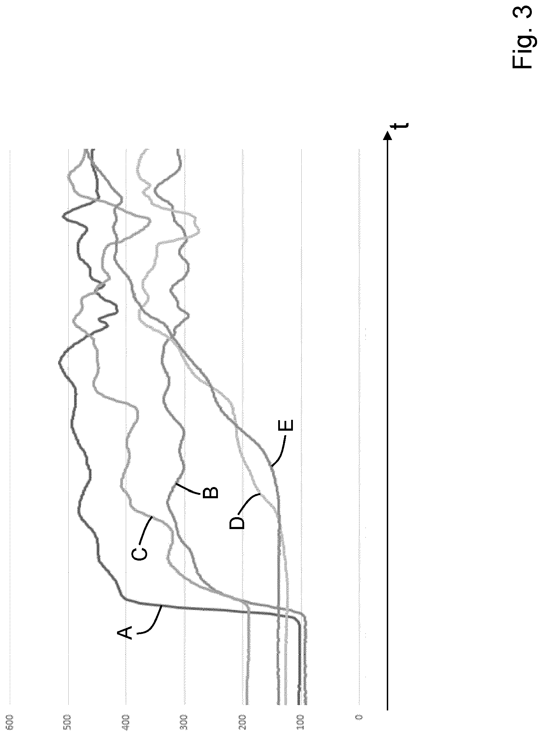

Die Figur 3 zeigt die Ausbreitung des Gases Wasserstoff über die Zeit hin von dem in Figur 2 dargestellten Sensor A zu dem Sensor E.

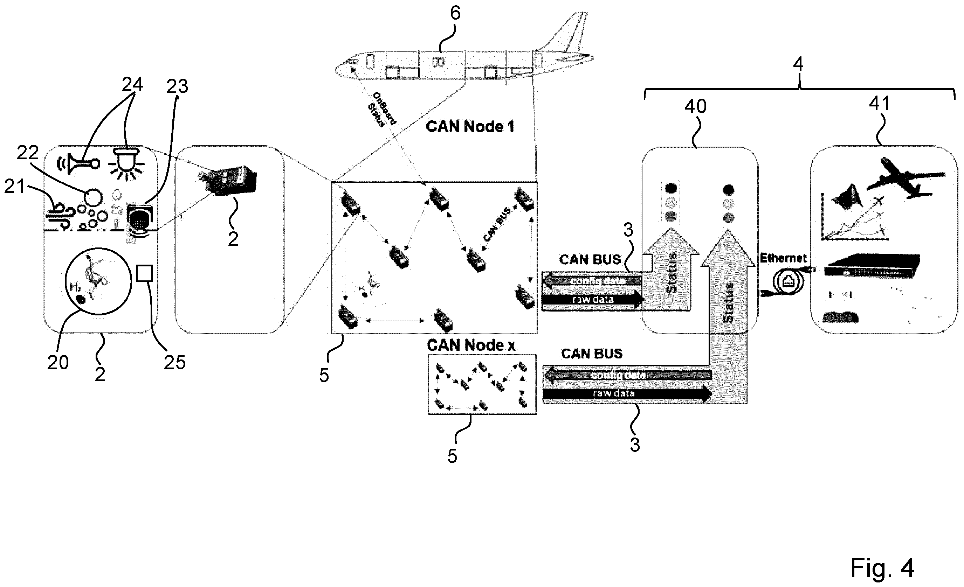

Figur 4 zeigt ein weiteres System zur Überwachung einer Wasserstoffanlage, diesmal in einem Luftfahrzeug 6. Das System weist als Grundbausteine wiederum Sensoreinheiten 2 auf, die als Multisensoren ausgebildet sind, d.h. die Sensoreinheiten 2 haben außer einem Gassensor 20 zur Wasserstoff-Sensierung noch weitere Sensoren 21, 22, 23 für weitere Umgebungsbedingungen, wie z.B. Luftströmung, Luftgüte, Luftfeuchtigkeit und gegebenenfalls noch weitere physikalische Größen. Zudem können die Sensoreinheiten 2 auch Ausgabeelemente 24 enthalten, z.B. akustische und/oder optische Signalgeber. Jede Sensoreinheit 2 hat eine Recheneinheit 25, z.B. einen Mikrocontroller,

Eine Vielzahl solcher Sensoreinheiten 2 ist zu einem smarten Sensornetzwerk 5 über ein Bussystem 3 miteinander verbunden, insbesondere einem CAN-Bus. Das gesamte System weist dabei mehrere solcher smarten Sensornetzwerke 5 auf, die an verschiedenen Stellen verteilt in dem Luftfahrzeug 6 angeordnet sind. Die diversen Sensoreinheiten 2 senden über ihre jeweiligen Bussysteme 3 Sensordaten an die Auswerteeinheit 4. Die Auswerteeinheit 4 ist in diesem Ausführungsbeispiel in Form einer Zentraleinheit 40 und einer Nachverarbeitungseinheit 41 realisiert. Die Nachverarbeitungseinheit 41 kann über ein separates Datenkommunikationsnetzwerk 7 mit der Zentraleinheit 40 zum Datenaustausch verbunden sind.

Das System hat ein Bus-basiertes, digitales und smartes Sensornetz. Jeder Sensor (Gas, Luftfeuchtigkeit, Temperatur, Luftströmung, Ultraschall, etc.) wird mit der Recheneinheit 25 verbunden. Diese Recheneinheiten können speziell auf den Sensor und den aktuellen Status/Einsatzbedingungen/Messanforderungen/Positionierung programmiert und jederzeit rekonfiguriert werden. Durch die lokale Digitalisierung, Parametrisierung und anschließender Signalanalyse kann der Zustand aller Sensoren mit einer einfachen Ampeldarstellung überwacht werden. Da auf der BUS Kommunikationsleitung fast ausschließlich Daten nur im Eventfall gesendet werden, besteht hohe Flexibilität der Datenkommunikation. Solch ein Eventfall wäre z.B. die Feststellung eines zu hohen Wasserstoffgehalts in der Luft. Auch die Sensorknotenanzahl (max.125) pro BUS könnten ausgenutzt werden. Dadurch besteht die Möglichkeit, jederzeit im Netz Smartsensoren hinzuzufügen, zu entnehmen, oder mit anderer Messparametrisierung zu erweitern.

Multi-Sensoreinheiten 2:
An den Schnittstellen der dedizierten Recheneinheit 25 (Mikrocontroller; µC) kann neben der H2-Konzentration weitere physikalische Mess- und Sensorentechnik, die für die genau H2-Deduktion benötigt werden, angeschlossen werden. Neben dem Ultraschall, Luftdruck-, Temperatur- Feuchtigkeits- und Luftströmungsgeschwindigkeitssensor werden auch Luftgütesensoren, welche auf verschiedene Arten von Gas trainiert werden können, eingesetzt. Dies ermöglicht flexibel, verschiedene Arten von Gas (neben Wasserstoff) zusätzlich zu detektieren und somit die Querempfindlichkeiten der Wasserstoffkonzentrationssensoren über die Recheneinheit (µC) "herauszurechnen". Der Luftgeschwindigkeitssensor ermöglicht darüber hinaus Windströmungen in das Modell einfließen zu lassen, so dass die Leckage auch bei sich bewegender Umgebungsluft präzise lokalisiert werden kann.

Auch Ausgangsignale (z.B. für optische oder akustische) könnten für eine Lokal Warnung hier angeschlossen werden. Zusätzlich ist es auch möglich Flugzeug-Statussignale hier in das Messsystem mit aufzunehmen.

### Smart Sensor

Jede dieser kleinen Recheneinheiten (µC) 25 wird über eine Bus-Schnittstelle (CAN-bus) miteinander verknüpft. Dies hat den Vorteil, dass jede Recheneinheit je nach Standortparametrisierung Daten aufzeichnen, speichern, sich selbst auswerten und Events melden kann. Im Eventfall, kann die Zentraleinheit 40 die Rohdaten der aktuellen Messung, sowie vergangene, aufgezeichnete Daten anfordern.

Um einen sicheren Betrieb der Smartsensorik zu garantieren, kann jede Sensoreinheit 2 in regelmäßigen Abständen eine Selbstüberprüfung vornehmen (Watchdog) und sendet in einem ebenfalls vordefinierten Abstand ein Statussignal an die Zentraleinheit 40. Auch kann jede Sensoreinheit 2 mit jeder anderen Einheit kommunizieren und sich z.B. selbst auf logische Messwerte kontrollieren. Jede Einheit kann ggf. einen Ausfall selbstständig melden und sich aus der Eventkette wegschalten. Im Eventfall kann die smarte Sensoreinheit 2 umliegende Einheiten zu höherer Messsensibilität aktivieren.

Eine weitere Anwendung bezieht sich auf die Standortbetrachtung des Sensors. Startet das Flugzeug 6 bspw. in Lima (Alt= 0m) und landet in Cusco (Alt= 4000m), sind die Sensoren sich stark verändernden Umgebungsbedingungen auch am Boden ausgesetzt. Damit es nicht zu einer Verzerrung der aufgenommenen Daten führt, kann diese Änderung den Smart Sensoren mitgeteilt werden, so dass dieser sich selbst dezentral neu kalibrieren.

### Zentraleinheit 40

Die Zentraleinheit 40 (Master Command Control Unit) dient als Zentraleinheit für die CAN-bus-Knoten sowie als Schnittstelle zum Post-Processing in der Nachverarbeitungseinheit 41. Über diese Zentraleinheit 40 können alle CAN-Busse 3 sowie auch jede einzelne Sensoreinheit 2 angesprochen und bidirektional kommuniziert werden.

### Post Processing in der Nachverarbeitungseinheit 41

Durch das umfassende Bild der Sensorumgebung, basierend auf einem solchen "smarten Sensornetz", können mit den generierten Daten sich selbstverbessende Modelle erstellt und Machine Learning angewandt werden. Die Ermittlung des Leckageortes kann dabei konkret über eine Reihe verschiedener Methoden erreicht werden. Eine Methode ist in der geometrischen Berechnung zu sehen. Auch wenn sich Wasserstoff nicht kugelförmig ausbreitet, so ist doch von einem kreisförmigen Ausbreiten unter der Decke des Raumes auszugehen. Damit kann ab einer Anzahl von drei Sensoren durch Triangulation der Ort der Leckage in der Ebene berechnet werden. Auch Gasmodelle z.B. auf Basis von CFD Analysen können hinterlegt werden und zu einer höheren Genauigkeit in der Ortsbestimmung führen.

Des Weiteren wird auch eine Konnektivität zu übergeordneten Systemen ermöglicht, beispielsweise eine Verbindung zu einer Augmented Reality Brille über eine OPC UA Schnittstelle, so dass ein Mechaniker die Sensordaten auch im 3-dimensionalen Raum wahrnehmen kann. Auch wird über das System eine mögliche Schnittstelle zu einem digitalen Zwilling bereitgestellt, der bspw. eine Flottenbetrachtung ermöglichen würde.

## Patentansprüche

1. System zur Überwachung einer Wasserstoffanlage (1) in einem Fahrzeug, die Wasserstoff-führende Speicher- und Leitungssysteme hat, auf Leckagen mit folgenden Merkmalen:
a) mehrere über die räumliche Erstreckung der Wasserstoffanlage (1) verteilte Sensoreinheiten (2), die jeweils wenigstens einen Gassensor (20) aufweisen, der zur Sensierung von aus der Wasserstoffanlage (1) austretendem gasförmigen Wasserstoff eingerichtet sind,
b) eine Auswerteeinrichtung (4), die wenigstens zur Auswertung der von den Sensoreinheiten (2) aufgrund deren Sensierung bereitgestellten Sensordaten eingerichtet ist,
c) wenigstens ein Datenkommunikationsnetzwerk (3), über das die Sensoreinheiten (2) zum Datenaustausch untereinander und mit der Auswerteeinrichtung (4) gekoppelt sind,
d) wobei die Auswerteeinrichtung (4) dazu eingerichtet ist, anhand der Daten mehrerer oder aller Sensoreinheiten (2) durch wenigstens eine geometrische Berechnung und/oder eine andere Auswertung den Ort (5) einer Leckage in der Wasserstoffanlage (1) zu bestimmen, wenn aufgrund der Sensordaten wenigstens der Sensoreinheiten (2) eine Leckage indiziert ist.

2. System nach Anspruch 1, **dadurch gekennzeichnet, dass** das Datenkommunikationsnetzwerk (3) als Datenbus ausgebildet ist.

3. System nach einem der vorhergehenden Ansprüche, **dadurch gekennzeichnet, dass** mehrere oder alle Sensoreinheiten (2) als hinsichtlich ihrer Funktionalität einstellbare Sensoreinheiten (2) ausgebildet sind, wobei die Auswerteeinrichtung (4) dazu eingerichtet ist, bei einer durch die Auswerteeinrichtung (4) erkannten Änderung des Zustands der Wasserstoffanlage (1) die Funktionalität einiger oder aller Sensoreinheiten (2) zu verändern.

4. System nach einem der vorhergehenden Ansprüche, **dadurch gekennzeichnet, dass** die Auswerteeinrichtung (4) dazu eingerichtet ist, anhand der Sensordaten wenigstens der Sensoreinheiten (2) iterativ sich selbst verbessernde Modelle der Wasserstoffanlage (1) zu erstellen, insbesondere durch Machine Learning, und auf Basis solcher Modelle die weitere Auswertung der Sensordaten durchzuführen.

5. System nach einem der vorhergehenden Ansprüche, **dadurch gekennzeichnet, dass** eine, mehrere oder alle Sensoreinheiten (2) wenigstens einen Luftströmungssensor haben, durch den Luftströmungen im Bereich der Wasserstoffanlage (1) erfasst werden, wobei die Auswerteeinrichtung (4) dazu eingerichtet ist, die Sensordaten des wenigstens einen Luftströmungssensors bei der Berechnung des Orts (5) einer Leckage in der Wasserstoffanlage (1) und/oder wenigstens eines sonstigen Zustandsparameters der Wasserstoffanlage (1) zu berücksichtigen.

6. System nach einem der vorhergehenden Ansprüche, **dadurch gekennzeichnet, dass** eine, mehrere oder alle Sensoreinheiten (2) wenigstens einen Luftgütesensor haben, durch den verschiedene Arten von Gasen außer Wasserstoff detektierbar sind, wobei die Auswerteeinrichtung (4) dazu eingerichtet ist, in Abhängigkeit von den Sensordaten des wenigstens einen Luftgütesensors Querempfindlichkeiten der Gassensoren zumindest teilweise zu kompensieren.

7. System nach einem der vorhergehenden Ansprüche, **dadurch gekennzeichnet, dass** der Auswerteeinrichtung (4) Daten bezüglich des Betriebszustands des Fahrzeugs zugeführt sind, wobei die Auswerteeinrichtung (4) dazu eingerichtet ist, die Bestimmung wenigstens eines Zustandsparameters der Wasserstoffanlage (1) in Abhängigkeit von den Betriebszustandsdaten des Fahrzeugs durchzuführen.

8. System nach einem der vorhergehenden Ansprüche, **dadurch gekennzeichnet, dass** in Abhängigkeit von Betriebszustandsdaten des Fahrzeugs die Sensoreinheiten (2) durch die Auswerteeinrichtung (4) neu kalibrierbar sind.

9. System nach einem der vorhergehenden Ansprüche, **dadurch gekennzeichnet, dass** eine, mehrere oder alle Sensoreinheiten (2) wenigstens eine lokal an der Sensoreinheit (2) angeordnete Recheneinheit haben, durch die eine Vorverarbeitung der Sensordaten der Sensoren (21, 22, 23) der jeweiligen Sensoreinheit (2) erfolgt, wobei durch die Recheneinheit insbesondere Querempfindlichkeiten der Gassensoren rechnerisch anhand von Sensordaten anderer Sensoren (21, 22, 23) der jeweiligen Sensoreinheit (2) kompensierbar sind.

10. System nach Anspruch 8, **dadurch gekennzeichnet, dass** die Recheneinheit der Sensoreinheit (2) dazu eingerichtet ist, eine lokale Überwachung der Wasserstoffanlage (1) auf Leckagen anhand der Sensordaten der Sensoreinheit (2) auszuführen und in Abhängigkeit von definierten Grenzwerten ein Leckageereignis zu detektieren, wobei die Recheneinheit dazu eingerichtet ist, erst bei Detektion eines Leckageereignisses das Leckageereignis charakterisierende Daten über das Datenkommunikationsnetzwerk (3) zur Auswerteeinrichtung (4) zu übertragen.

11. System nach Anspruch 10, **dadurch gekennzeichnet, dass** die Recheneinheit der Sensoreinheit (2) dazu eingerichtet ist, auch ohne Auftreten von Leckageereignissen in regelmäßigen oder unregelmäßigen zeitlichen Abständen wenigstens ein Statussignal über das Datenkommunikationsnetzwerk (3) zur Auswerteeinrichtung (4) zu übertragen.

12. System nach einem der Ansprüche 10 bis 11, **dadurch gekennzeichnet, dass** die Recheneinheit der Sensoreinheit (2) dazu eingerichtet ist, bei Erkennung eines Leckageereignisses räumlich benachbarte Sensoreinheiten (2) zur Gassensierung mit erhöhter Messsensibilität zu aktivieren.

13. System nach einem der Ansprüche 10 bis 12, **dadurch gekennzeichnet, dass** die Sensoreinheiten (2) dazu eingerichtet sind, in einem Empfindlichkeitstestmodus betrieben zu werden, wobei in dem Empfindlichkeitstestmodus die Sensoreinheit (2) dazu eingerichtet ist, das Vorhandensein eines anderen Gases als Wasserstoff, insbesondere eines nichtexplosiven Gases, zu detektieren und als Leckageereignis zu melden.

14. Fahrzeug mit wenigstens einer Wasserstoffanlage (1), die Wasserstoff-führende Speicher- und Leitungssysteme hat, und wenigstens einem System zur Überwachung der Wasserstoffanlage (1) nach einem der vorhergehenden Ansprüche, das zur Überwachung der wenigstens einen Wasserstoffanlage (1) des Fahrzeugs auf Leckagen eingerichtet ist.
